# EUROPEAN PATENT APPLICATION

(11) **EP 2 532 703 A1**
(43) Date of publication of application: **12.12.2012**
(21) Application number: 12181543.5
(22) Date of filing: 19.03.2007
(51) Int. Cl.: C08J 5/18

(54) **Stacked, patterned biomaterials and/or tissue engineering scaffolds**

(62) Divisional of application: 07748778.3
(71) Applicant: Hasirci, Vasif, 06531 Ankara (TR)
(72) Inventor: Hasirci, Vasif, 06531 Ankara (TR); Vrana, Nihal Engin, 06531 Ankara (TR); Zorlutuna, Pinar, 06531 Ankara (TR)
(74) Representative: Louis Pöhlau Lohrentz

(57) **Abstract**

Stacked, lamellar constructs comprised of, synthetic or natural, polymeric membrane structures which are brought together to form 3D scaffolds for biomaterial and guided tissue engineering applications have been developed. Each layer can have 2D or 3D nano and micro topographical features similar to or different than each other which can be arranged during the construction of each lamellae and their orientation can be adjusted during construction phase of the 3D structure. Such a construct was utilized in the development of an artificial cornea with human primary cells, in which patterned surface of the components of the lamellar structure mimics the oriented collagen structure inherent in natural cornea. Similar exploitation of the 3D patterned structure can be made for tissues where aligned ECM architecture is crucial, such as ligaments, bone, tendon, skin.

## Description

### TECHNICAL FIELD OF INVENTION

Invention presented aims to improve the efficiency of biomaterials and tissue engineering scaffolds by introducing precise control of surface topography in a 3D biomaterial or tissue engineering construct by using polymeric nano and micropatterned building blocks.

### BACKGROUND OF INVENTION

As an alternative method to transplantation for remediation of tissue damage or loss, tissue engineering utilizes scaffolds which are permissive to cell growth and can be degraded and remodeled under in vivo conditions, Most tissue engineering scaffolds are designed to provide sufficient space for cells to grow in and have random porosity to allow diffusion of molecules and cells. It has been shown that remodeling process can be strongly affected if physical or chemical cues are presented to the cells on the surface of tissue engineering scaffolds. Responses of the cells range from cell orientation to aligned extracellular matrix secretion to more subtle changes such as degree of differentiation. For many tissues, intricate extracellular matrix structure is crucial for the functionality of the tissue, and tissue properties generally depend on the orientation of ECM molecules such as collagen and elastin and distribution of the cells.

Natural tissues generally contain more than one cell type in each individual layer arranged in a specific spatial orientation with respect to each other. This orientation and separation is essential for the functionality of these tissues. As an example, cornea tissue contains 5 distinct layers and 3 different cell types, the spatial organization of which should be imitated in order to produce an artificial cornea. Thus, a tissue engineering scaffold for complex tissues with more than one cell type should provide necessary separations between different cell types and at the same time should allow interaction between different cell types through physical and chemical cues available.

Most of the current tissue engineering scaffold designs either have homogeneous forms, such as foams with a random distribution of the pores, or have 2D or 3D features restricted to surface, which in turn can just affect 2D organization of the cells. Different cell types react to different range of topographies (type and magnitude) and accurate simulation of these differences on the tissue engineering scaffolds would improve their efficiency. For example, it has been demonstrated that responses of corneal epithelial and stromal cells to surface cues are distinctly different and the size of the optimal surface topographical feature for each type of cell are different. Thus, a 3D construct with lamella with unique 2D or 3D properties can provide different topographical features for each layer and allow the creation of a scaffold suitable for a complex, multilayer, multi-cell tissue. Thus biomaterials designed for tissue engineering and non-tissue engineering purposes will benefit from the construct developed.

In addition cell free biomaterials with patterned layers and stacked to form multilayer constructs may also be preferable to single layer, unpatterned biomaterials due to their increased organization and thus mimicking more closely the tissue they mimic and/or replace.

### SUMMARY OF INVENTION

The present invention describes a 3D multilamellar construct manufactured from preproduced individual lamella, of either natural or synthetic polymer origin, which have micro- or nano- scale surface features designed to affect biomaterial performance or cell behavior. This invention includes different methodologies developed for different polymers for preparation of 3D construct, and 3D scaffolds with different dimensions and designs both physical and chemical, with respect to the orientation of lamellae, and different size surface features and multilamellar structures of different thicknesses. It also relates to the application of these structures generally to biomaterials and specifically to tissue engineering of scaffolds for tissues, and especially for a specific target tissue, cornea.

The exemplary demonstration of the present invention, is made with two different polymeric substances, 1) polyesters poly(L-lactide-*co*-D,L-lactide) ((P(L/DL)LA) and poly(3-hydroxybutyric acid-*co*-3-hydroxyvaleric acid) (PHBV), and 2) collagen. Briefly, collagen and P(L/DL)LA-PHBV membranes with topographical features at micro scale were produced by using photolithography and soft lithography techniques followed by solvent casting. Then solid membranes were brought together by heat application to specific contact points determined with careful consideration of the mechanical properties desired for the specific application. The second method developed is the application of an appropriate solvent in minute amounts to the contact points for local wetting followed by drying process. A third method includes the application of crosslinker solutions, in which the strength of attachment of two layers can be controlled by the concentration, amount and type of crosslinker.

The following detailed description of an embodiment of the invention and related drawings, figures and their descriptions are only of exemplary nature and thus should not be regarded restrictive or illustrative. Further features and aspects of the presented invention will become apparent to those of ordinary skill in the art upon reading and understanding the following detailed description.

### BRIEF DESCRIPTION OF THE FIGURES

The accompanying drawings, which are incorporated into and form a part of the specification, schematically illustrate one or more exemplary embodiments of the invention and, together with the general description given above and detailed description of the preferred embodiments given below, serve to explain the principles of the invention.

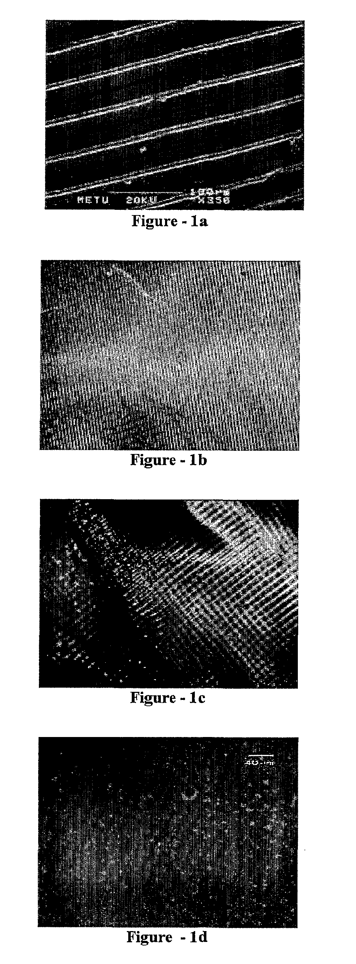

- Figure 1a.: SEM micrograph of a patterned collagen film
- Figure 1b,: Stereomicrograph of a patterned collagen film (Magnification x30)
- Figure 1c.: Stereomicrograph of a collagen film-based, 3D multilayer construct. In each layer the pattern direction is orthogonal to the subsequent layer. Because of the transparency of the collagen films lower layers can be seen.
- Figure 1d.: Fluorescence micrograph (DAPI staining for cell nuclei) of a collagen film multilayer, seeded with human corneal keratocytes, after 14 days of incubation.

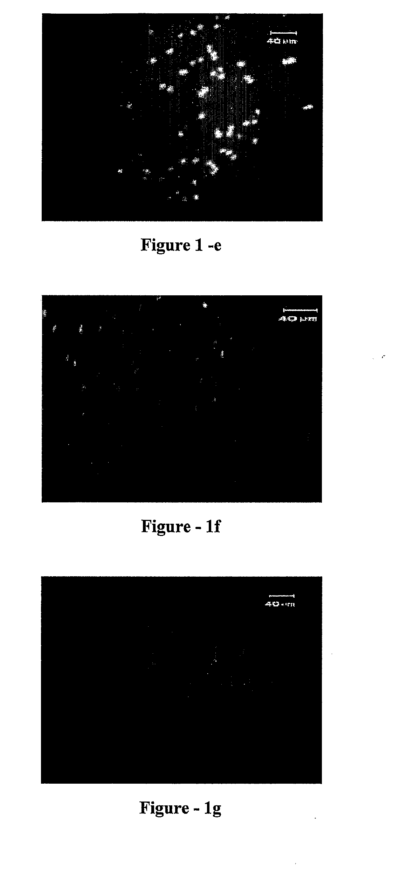

- Figure 1e.: Fluorescence micrograph (DAPI staining for cell nuclei) of a single, patterned collagen film layer, seeded with another type of cell, D407 retinal pigment epithelium cells, after 7 days of incubation.
- Figure 1f.: Fluorescence micrograph (Acridine orange staining for cell nuclei) of a single, patterned collagen film, seeded with human corneal keratocyte, after 7 days of incubation.
- Figure 1g.: Fluorescence micrograph showing distribution of FITC-labeled phalloidin staining of cytoskeletal element (f-actin) and orientation of human corneal keratocytes on single layer of patterned collagen films after 7 days of incubation.

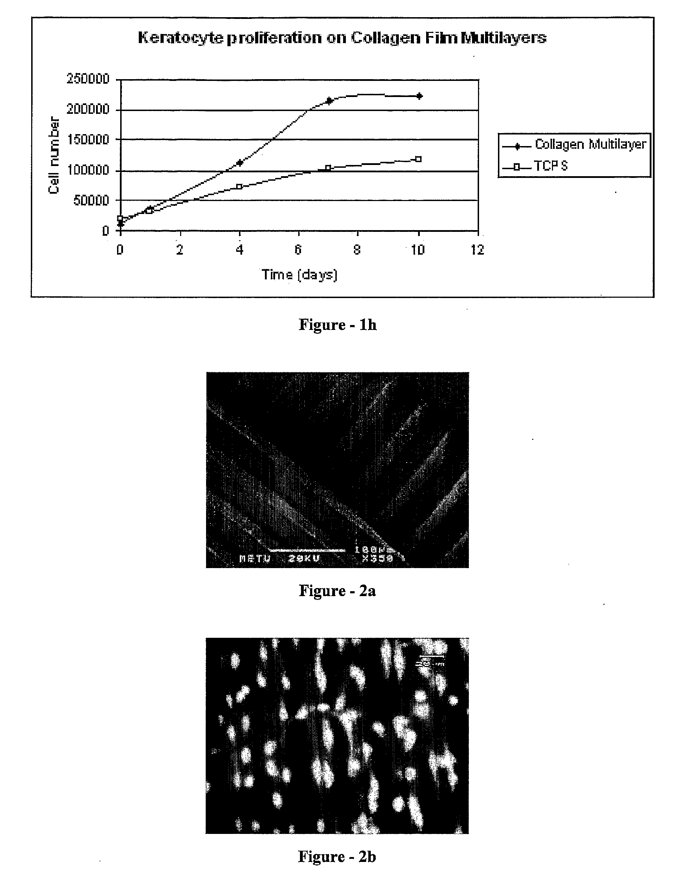

- Figure 1h.: Proliferation rate of human corneal keratocytes on a 3 layered collagen film multilayer as determined by Alamar Blue assay. Tissue culture polystyrene was used as the control.
- Figure 2a.: SEM micrograph of a bilayer of A3 patterned (P(L/DL)LA-PHBV films. Films were brought together in an orientation where the pattern axes were orthogonal to each other.
- Figure 2b.: Fluorescence micrograph (Acridine orange staining for cell nuclei) of D407 retinal pigment epithelium cell-seeded, patterned (P(L/DL)LA-PHBV film after 1 day of incubation.

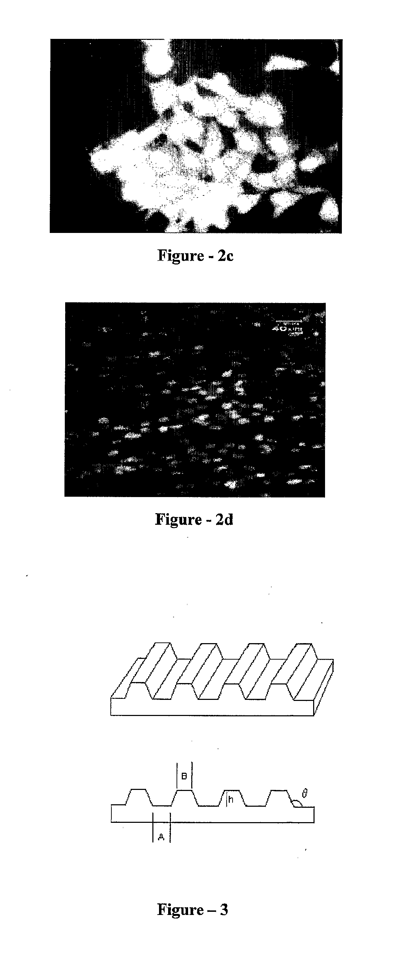

- Figure 2c.: Fluorescence micrograph (Acridine orange staining for cell nuclei) of D407 retinal pigment epithelium cell-seeded patterned (P(L/DL)LA-PHBV film, after 7 days of incubation. Pattern dimensions are different than the others.
- Figure 2d.: Fluorescence micrograph (DAPI staining for cell nuclei) of human corneal keratocyte seeded, patterned (P(L/DL)LA-PHBV films, after 21 days of incubation.
- Figure 3: Enlarged perspective view of a template (A: Groove width, B: Ridge width, h: Groove depth, θ: Inclination angle)

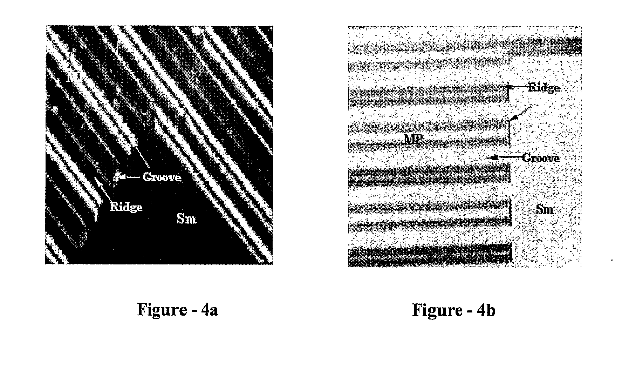

- Figure 4a: Light micrograph of template (micropattemed Si template - x350) (Sm: smooth-unpatterned region, MP micropatterned region)
- Figure 4b: Light micrograph of polymeric film obtained from the template (micropattemed PHBV-P(L/DL)LA film - x100) (Sm: smooth-unpatterned region, MP micropatterned region)

### DETAILED DESCRIPTION OF THE INVENTION

In the processes developed in this invention polymers of natural or synthetic origin were used.

Solutions of collagen and solutions of blends of natural and synthetic origin polyesters in different ratios with different concentrations were prepared.

As an example to polyesters, blends of P(L/DL)LA and PHBV were used. Solutions were poured onto patterned templates either produced on silicon wafers by photolithography or obtained by transferring the "parallel grooves and ridges" designs from primary templates made of silicon wafers onto secondary templates. Membrane structures which have inverse surface patterns of the template were produced by solvent casting. Template structure could be of any topographical feature, such as ridges or grooves connected by inclined surfaces of any inclination degree and varying ridge and groove dimensions. Any type of micropattern such as cobblestone, pillar, 2D stripes, square, circular, etc. could be obtained either by photolithography or for nano scale patterning by electron beam lithography or interference lithography or embossing or contact printing or AFM based lithography to accommodate the necessities of any 3D design.

Since the 3D structure of natural polymers is generally very sensitive to harsh treatments a mild chemical method for construction of 3D collagen multilayer was invented. Collagen solution in acetic acid was poured onto micropatterned templates and after solution was air dried, the collagen films formed were peeled off. As the collagen solution different solutions can be used. As an example 0.2 mL, 15 mg/mL in 0.5 M acetic acid can be given. To stabilize these films a crosslinking procedure was carried out. Their crosslinking was achieved by incubation in EDC and NHS. As an example crosslinking can be achieved by incubation in 33 mM EDC and 6 mM NHS in 50 mM NaH₂PO₄ buffer (pH 5.5) for 2 h at room temperature. Constructs were washed with Na₂HPO₄ buffer (pH 9.1) for 1 h and then washed successively with 1 and 2 M NaCl. Attachment of several crosslinked films to each other was achieved by addition of a dilute solvent of collagen, 0.1 % acetic acid. Solvent addition causes localized dissolution to a certain extent depending on the concentration and the amount of the solvent. Subsequent air drying creates a contact between the membranes due to simultaneous dissolution and drying at the locations which come into contact with the solvent.

A second technique for attaching collagen films, involving collagen solution and a concentrated crosslinking solution, was developed. Collagen solution was applied at the desired contact points to act as a glue between the two layers, and after addition of the collagen solution a concentrated crosslinking solution consisting of EDC/NHS was added to attach the collagen in the solution to the two membranes. With this method, the strength of the contact can be finely adjusted by changing parameters such as concentrations of collagen and crosslinker solution.

P(L/DL)LA-PHBV membranes were formed by solvent casting of a solution of P(L/DL)LA and PHBV in organic solvents such as chloroform or dichloromethane to produce micropatterned membranes with pattern dimensions inverse of those of the template. Micropatterned silicon templates with different dimensions and geometries were produced by photolithography and subsequent chemical etching. The formed membranes were removed by peeling (average film thickness 42 µm) and attached to each other by heat application to 4 corners, melting the polymer films at these points. Alternatively, attachment can be made as in the case of collagen constructs, by placing a droplet of solvent at the corners which causes local dissolution of the polymer to a certain extent depending on the amount of solvent. Air drying of the structure creates a contact between two membranes due to simultaneous dissolution and drying at the points which come into contact with the solvent,

The number of adhesion/contact points, the relative orientation of the surface topographical features, size and geometry of the features, dimensions of each film layer and number of layers can be adjusted during the manufacturing process according to the specific necessities of the target tissue. If a layer of tissue with each layer having a different organization and cell is required than multilayers of different orientations can be separately prepared and then brought together to create a construct with a multilayer, multiorientation structure. If an enhanced level of interaction is necessary between the different cell types present, or if an increased permeability for transference of solutes, growth factors, bioactive agents is needed films can be rendered partially porous by addition of appropriate solute particles of desired dimensions and their subsequent dissolution by a proper solvent which only dissolves these particles and not the film material. Similar property may be achieved by pore formation upon exposure to particulates and electromagnetic radiation. If gradual provision of bioactive agents such as growth factors are needed these agents could be dissolved in the membrane.

### EXAMPLE

### Film preparation

Three types of films, 1) Patterned (P(L/DL)LA-PHBV films on Type I pattern, 2) Patterned (P(L/DL)LA-PHBV films on Type II pattern, and 3) Patterned collagen films on inverse Type I pattern, were obtained. Films were produced by solvent casting as described previously and the geometry and dimensions of the patterns are given in Table 1.

**Table 1. Geometry and dimensions of the patterns used**

| Template | Geometry of template | Groove width (µm) | Ridge width (µm) | Groove depth (µm) | Inclination angle (degree) |
|---|---|---|---|---|---|
| Type I | Parallel channels | 2 | 10 | 30 | 54.7 |
| Type I inverse | Parallel channels | 10 | 2 | 30 | 54.7 |
| Type II | Alternating square pits | 4 | 20/10 | 1 | 90 |

### Multilayer preparation

Patterned (P(L/DL)LA-PHBV films were brought together by heat treatment at the edges of the films. By this method up to 8 layers of (P(L/DL)LA-PHBV films were brought together successfully.

Patterned collagen films were brought together by application of collagen and EDC/NHS solutions successively. Up to 3 layers of collagen films were stuck to each other by this method.

Since these 3D constructs were prepared especially for cornea tissue engineering purposes, orientation of the patterns with respect to each other was perpendicular in order to mimic natural corneal stroma structure.

Multilayers were sterilized by immersing in sterile EtOH (70%) for 2 h at 4 ºC. Constructs were then washed 4 times with phosphate buffer saline (PBS).

### In Vitro Studies

Human keratocytes culturing was started at passage 2 of a primary cell line and propagated until passage 8. In all experiments keratocytes between passages 4-8 were used, The composition of the keratocyte medium for 500 mL was as follows: 225 mL of DMEM high glucose, 225 ml of Ham F12 medium, 50 mL of new born calf serum, 10 ng/mL human recombinant b-FGF, amphotericin (1 µg/mL), streptomycin (100 µg/mL) and penicillin (100 UI/mL) at 37 °C, 5 % CO₂ in a carbon dioxide incubator. The cells were passaged using 0.05 % trypsin-EDTA solution.

D407 retinal pigment epithelium cells (passage 5 to 15) were cultivated in high glucose DMEM supplemented with 5 % fetal bovine serum (FBS), 100 units/mL penicillin and 100 units/mL streptomycin at 37 °C, 5 % CO₂ in a carbon dioxide incubator. The cells were passaged using 0.05 % trypsin-EDTA solution.

Keratocytes and D407 cells were detached from the tissue culture flasks by using 0.05 % trypsin for 5 min at 37 °C, then centrifuged for 5 min at 3000 rpm and resuspended in their respective media. Cell number was counted using NucleoCounter (ChemoMetec A/S, Denmark). 50 000 cells/20 µL were seeded on each construct and the constructs were not disturbed for 30 min to allow cell attachment. After 30 min, 500 µL of media was supplemented to each constructs. They were incubated in a CO₂ incubator (5 % CO₂, 37 °C) for 21 days. The medium was refreshed every day. Tissue culture polystyrene (TCPS) was used as the control.

### SEM Characterization

For SEM, specimens were washed with cacodylate buffer (0.1 M, pH 7.4) and distilled water and freeze dried. Samples were examined with SEM after being sputter coating with gold,

### Fluorescence Stainings

For fluorescence microscopy (IX 70, Olympus, Japan), specimens were first fixed with glutaraldehyde (2.5 %) for 2 h and then washed twice with phosphate buffered saline (PBS) (10 mM, pH 7.4). The samples to be stained with Acridine orange were washed with HCl (0.1 M) for 1 min and Acridine orange was added. After 15 min, Acridine orange was removed and the sample was washed with distilled water. The cells were observed under the fluorescence microscope at the excitation wavelength range of 450-480 nm.

For DAPI and Phalloidin staining, cells on the films were fixed with 4 % formaldehyde for 15 min and washed twice with PBS. Then the cells treated with 1 % Triton-X-100 for 5 min in order to permeabilize the cell membrane and washed again by PBS 3 times. Samples were then incubated in a blocking solution (1% BSA (bovine serum albumin) in PBS) for 30 min at room temperature and in staining solution for 1 h at 37°C. Staining solution was 1 % Phalloidin and 0.1 % DAPI in 0.1 % BSA in PBS solution. After incubation, samples were washed with PBS and examined under fluorescence microscope at excitation wavelengths of 450-480 nm for Phalloidin and 330-385 nm for DAPI.

### Cell Proliferation Assay

To determine the cell proliferation rate, Alamar Blue cell proliferation assay was performed. At time points 1, 4, 7, and 10 days for keratocyte seeded multilayers, medium was discarded and samples were washed several times with sterile PBS. Then 5 %, 500 µL Alamar Blue solution was added and samples were incubated in a CO₂ incubator (5 % CO₂, 37 °C) for 1 h. After incubation, Alamar Blue containing media were collected and their absorbance at 570 and 600 nm were determined by a UV-Visible spectrophotometer. Percent reduction of the dye by the metabolic activity of the cells was then determined by using the absorption coefficients of the reduced and the oxidized dye. Cell number was then determined by using a calibration curve constructed using the reduction percentage of the dye in the presence of known cell numbers.

### BRIEF EXPLANATION OF THE PROCESS

In this invention different methodologies have been developed for different polymers for the preparation of biomaterials and/or 3D scaffolds with different dimensions and designs, both physical and chemical, with respect to the orientation of lamellae, and different size surface features and multilamellar structure of different thickness.

The main steps of these methodologies are;
- Solutions of collagen, and solution of blends of P(L/DL)LA and PHBV with different concentrations are prepared.
- Polymer solutions are poured onto patterned templates either produced on silicon wafers by photolithography or obtained by transferring the "parallel grooves and ridges" or "alternating square pits" designs from primary templates made of silicon wafers onto secondary templates.
- Membrane structures which have same or inverse surface patterns of the template are produced by solvent-casting.
- Template structure could be of any topographical feature, such as ridges or grooves connected by inclined surfaces of any inclination degree and varying ridge and groove dimensions. Any type of micropattern such as cobblestone, pillar, 2D stripes, square, circular, etc. could be obtained either by photolithography or for nano scale patterning, by electron beam lithography or interference lithography photolithography or embossing or contact printing or AFM based lithography to accommodate the necessities of any 3D design.
- When the polymer used is collagen, a mild chemical method for construction of 3D collagen multilayers is developed; the 3D structure of natural polymers is generally very sensitive to harsh treatments.
- Collagen solution (in acetic acid) having a concentration of 2-25 mg/mL (preferably 15 mg/mL) is poured onto micropatterned templates. Low end of concentration range is due to extremely low thickness and low mechanical property whereas the high end is due to the excessive viscosity that hinders proper processing.
- The amount of collagen solution poured onto template is 50 µL - 1 mL per square cm of template surface; not lower than 50 microliter to prevent too thin films with insufficient thickness and mechanical strength and not higher than 1 mL because it will not be possible to maintain higher volumes on such a small area and also the resultant films would be too thick, too rigid and of low transparency.
- After the solution is dried, the collagen films formed are peeled off.
- Drying is achieved in between 10 to 24 hours at room temperature without any gas or air circulation. Drying duration may be shortened when the temperature is higher, when there is air or gas circulation or when heated or when solution volume used is lower.
- To stabilize these films a crosslinking procedure is carried out.
- The crosslinking is achieved by incubation in 33 mM EDC and NHS in buffer preferably phosphate buffer (preferably pH 5.5) for 2 h at room temperature. The pH value of buffer is between 4 and 6 due to the decreased reactivity of EDC outside this pH range. Duration of cross linking is in between 30 minutes and 4 hours, depending on the degree of crosslinking required, and at temperatures between +4 to 37°C, where the upper limit is due to the denaturation of collagen at the temperatures above 37°C.
- Cross linking can be achieved by glutaraldehyde, genipin, dendrimers and others.
- Constructs are washed with buffer, preferably phosphate buffer, for 1 h and then washed successively with 1 and 2 M NaCl. Buffer is preferably Na₂HPO₄ and its pH value is preferably 9.1.
- Attachment of several crosslinked films to each other is achieved by application of drops a dilute solvent of collagen, 0.1 % acetic acid,
- Solvent application causes localized dissolution to a certain extent depending on the concentration and the amount of the solvent Subsequent drying creates a contact between the membranes due to simultaneous dissolution and drying at the locations which come into contact with the solvent.
- The solutions of blends of polyesters in different ratios with different concentrations in organic solvents are prepared,
- The polyesters are preferably P(L/DL)LA and PHBV,
- The films were formed by solvent casting of a solution P(L/DL)LA and PHBV in organic solvents to produce micropatterned membranes with pattern dimensions inverse of those of the template. Organic solvents may be chloroform, dichloromethane and the like.
- The polymer solution concentration is 2-10 %, preferably 4%, in an organic solvent; not lower than 2% to achieve sufficient thickness and mechanical strength and not higher than 10% to achieve proper viscosity for proper film formation.
- Micropatterned silicon templates with different dimensions and geometries were produced by photolithography and subsequent chemical etching.
- P(L/DL)LA and PHBV blend ratio may be varied between 1:0 to 0:1 preferably 1:1 to achieve films of different transparency and rigidity.
- P(L/DL)LA and PHBV solution poured onto template is 50 µL - 1 mL per square cm of template surface; not lower than 50 µL to prevent too thin films with insufficient thickness and mechanical strength and not higher than 1 mL because it will not be possible to maintain higher volumes on such a small area and also the resultant films would be too thick, too rigid and of low transparency.
- Drying is achieved in 10 or more hours at room temperature without any gas or air circulation or vacuum application or heating. Shorter duration would lead to solvent retention and improper performance. When the temperature is higher, when there is air or gas circulation, when vacuum is applied or when the solution volume used is lower then the drying duration may be shortened.
- The formed membranes were removed by peeling (average film thickness 42 micrometers) and attached to each other by heat application to 4 corners, melting the polymer films at these points.
- Alternatively, attachment can be made by placing a droplet of solvent at the corners which causes local dissolution of the polymer to a certain extent depending on the amount of solvent.
- Drying of the structure creates a contact between two membranes due to simultaneous dissolution and drying at the points which come into contact with the solvent.

### BRIEF EXPLANATION OF THE ALTERNATIVES OF THE PROCESS

A second technique for attaching collagen films involving collagen solution and a concentrated crosslinking solution was developed.
- Collagen solution was applied at the desired contact points to serve as a glue between two successive layers
- After addition of the collagen solution a concentrated crosslinking solution consisting of EDC/NHS was added to attach the collagen in the solution to the two membranes.
- With this method, the strength of the contact can be finely adjusted by changing parameters such as concentration of collagen and crosslinker solution.

A third technique for attachment of subsequent collagen film layers to each other is application of an adhesive such as fibrin glue or cyanoacrylate.

The number of adhesion/contact points, the relative orientation of the surface topographical features, size and geometry of the features, dimensions of each film layer and number of layers can be adjusted during the manufacturing process according to the specific requirements of the target tissue.

The template structure is any type of micropattern such as cobblestone, pillar, 2D stripes, square, circular.

The templates could be obtained either by photolithography or electron beam lithography or interference lithography or embossing, or contact printing or AFM based lithography to accommodate the necessities of any 3D design.

The designs on the templates could be at nano or micro level.

The constructs may be seeded with cells that are appropriate for the target tissue.

The constructs may be seeded with one or more than one cell type according to the cell population of the target tissue.

If layers of tissue, where each layer has a different organization and cell, is required then multilayers of different orientations can be separately prepared and brought together to create a multilayer, multiorientation, and multicell construct.

If an enhanced level of interaction is necessary between the different cell types present, or if an increased permeability for transference of solutes, growth factors, bioactive agents is needed then the films can be rendered partially porous by leaching off solute particles of desired dimensions contained in a proper solvent which only dissolves these particles and not the film material. Creation of pores may also be achieved through application of electromagnetic or particulate radiation

If gradual provision of bioactive agents such as growth factors are needed these agents could be dissolved in the films.

The process is applied to natural and synthetic polymers such as chitosan, NIPAM, PDMS, PCL, hyaluronic acid, chondroitin sulfate or blends of biodegradable and nondegradable polymers.

### Preferred embodiments

According to a first preferred embodiment of the process for different polymers for preparation of stacked, patterned biomaterials and/or tissue engineering 3D scaffolds with different dimensions and designs, both physical and chemical, with respect to the orientation of lamellae, and different size surface features and mulilamellar structure of different thickness is characterized by the steps of;
- Preparation of solutions of collagen, with different concentrations,
- Pouring collagen solution onto patterned templates
- Producing film structure which have same or inverse surface patterns of the template by solvent casting,
- Drying and peeling off the collagen films formed on the micropatterned templates,
- Carrying out a crosslinking procedure to stabilize the films,
- Washing the films,
- Achieving the attachment of several corsslinked films to each other,
wherein preferably the collagen solutions concentration is 2 - 25 mg/mL, and/or
wherein preferably the amount of collagen solution poured onto template is 50µL - 1µL per square cm of template surface, and/or
wherein preferably the patterned templates may be either produced on silicon wafers by photolithography or obtained by transferring the designs from primary templates made of silicon wafers onto secondary templates, and/or
wherein preferably drying is achieved in between 10 to 24 hours at room temperature with any gas or air circulation, and/or
wherein preferably the drying duration may be shortened when the temperature is higher, when there is air or gas circulation or when solution volume used is lower, and/or
wherein preferably the crosslinking can be preferably achieved by incubation in EDC and NHS, and/or
wherein preferably the crosslinking can be preferably achieved by incubation in EDC and NHS in buffer, and/or
wherein preferably the crosslinking can be preferably achieved by incubation in EDC and NHS in phosphate buffer, and/or
wherein preferably the pH value of buffer is between 4 and 6, preferably 5.5 due to the decreased reactivity of EDC outside this pH range, and/or
wherein preferably the crosslinking duration is in between 30 minutes and 4 hours, depending on the degree of crosslinking required, at temperatures between +4 to 37°C, where the upper limit is due to the denaturation of collagen at the temperatures above, preferably 2 hr, at room temperature, and/or
wherein preferably the crosslinking can be achieved by glutaraldehyde, genipin, dendrimers, and/or
wherein preferably the films are washed in buffer, and/or
wherein preferably the films are washed with phosphate buffer, and/or
wherein preferably the films are washed with preferably Na₂HPO₄ for 1 h and then washed successively with 1 and 2 M NaCl, and/or
wherein preferably the subsequent layers are attached to each other by solvent application, and/or
wherein preferably the subsequent layers are attached to each other by crosslinker and collagen solution mixture application, and/or
wherein preferably the subsequent layers are attached to each other by application of an adhesive such as fibrin glue.

In a further preferred embodiment of the first aspect of the present invention the template structure is of any topographical feature, such as ridges or grooves connected by inclined surfaces of any indignation degree and varying ridge and groove dimensions, and/or
wherein preferably the number of adhesion/contact points, the relative orientation of the surface topographical features, size and geometry of the features, dimensions of each film layer and number of layers can be adjusted during the manufacturing process according to the specific requirements of the target issue.
wherein preferably the template structure is any type of micropattern such as cobblestone, pillar, 2D stripes, square, circular, and/or
wherein preferably the templates could be obtained either by photolithography or electron beam lithography or interference lithography or embossing or contact printing or AFM based lithography to accommodate the necessities of any 3D design, and/or
wherein preferably the designs on the templates could be at nano or micro level, and/or
wherein preferably the constructs may be seeded with cells that are appropriate for the target tissue to be reconstructed.

According to a second preferred embodiment of the process for different polymers for preparation of stacked, patterned biomaterials and/or tissue engineering 3D scaffolds with different dimensions and designs, both physical and chemical, with respect to the orientation of lamellae, and different size surface features and mulilamellar structure of different thickness is characterized by the steps of;
- Preparation of solutions of blends of polymers in different ratios with different concentrations in organic solvents,
- Pouring the solutions of blends of polymers onto patterned templates
- Producing film structures which have same or inverse surface patterns of the template by solvent-casting,
- Drying and peeling off the blends of polymer films formed,
- Achieving the attachment of several films to each other, and
wherein preferably solutions of blends of polymers are preferably the polyesters P(L/DL)LA and PHBV, and/or
wherein preferably organic solvent may be chloroform or dichloromethane.
wherein preferably P(L/DL)LA and PHBV solution concentration is 2-10%, preferably 4%, and/or
wherein preferably P(L/DL)LA and PHBV blend ratio may be varied between 1:0 to 0:1, preferably 1:1 and/or
wherein preferably the amount of P(L/DL)LA and PHBV solution poured onto template is 50 µL - 1 µL per square cm of template surface, and/or
wherein preferably the patterned templates may be either produced on silicon wafers by photolithography or obtained by transferring the designs from primary templates made of silicon wafers onto secondary templates, and/or
wherein preferably drying is achieved in 10 or more hours at room temperature with any gas or air circulation or vacuum application or heating, and/or
wherein preferably the drying duration may be shortened when the temperature is higher, when there is air or gas circulation, when vacuum is applied or when the solution volume used is lower, and/or
wherein preferably the subsequent layers are attached to each other by heat application, and/or
wherein preferably the subsequent layers are attached to each other by solvent application, and/or
wherein preferably the subsequent layers are attached to each other by application of an adhesive such as cyanoacrylate.

In a further preferred embodiment of the second aspect of the present invention the template structure is of any topographical feature, such as ridges or grooves connected by inclined surfaces of any inclination degree and varying ridge and groove dimensions, and/or
wherein preferably the number of adhesion/contact points, the relative orientation of the surface topographical features, size and geometry of the features, dimensions of each film layer and number of layers can be adjusted during the manufacturing process according to the specific requirements of the target issue, and/or
wherein preferably the template structure is any type of micropattern such as cobblestone, pillar, 2D stripes, square, circular, and/or
wherein preferably the templates could be obtained either by photolithography or electron beam lithography or interference lithography or embossing or contact printing or AFM based lithography to accommodate the necessities of any 3D design, and/or
wherein preferably the designs on the templates could be at nano or micro level, and/or
wherein preferably the constructs may be seeded with cells that are appropriate for the target tissue to be reconstructed.

## Claims

1. Stacked, patterned tissue engineering 3D scaffolds **characterized in that** the constructs may be seeded with at least one cell type according to the cell population of the target tissue.

2. Stacked, patterned biomaterials and/or tissue engineering 3D scaffolds as obtained according to claim 1 wherein layers of tissue, where each layer has a different organization and cell, is required then multilayers of different orientations can be separately prepared and brought together to create a multilayer, multiorientation, and multicell construct.

3. Stacked, patterned biomaterials and/or tissue engineering 3D scaffolds as obtained according to claim 2 wherein an enhanced level of interaction is necessary between the different cell types present, or if an increased permeability for transference of solutes, growth factors, bioactive agents is needed then the films can be rendered partially porous by leaching off solute particles of desired dimensions in a proper solvent which only dissolves these particles and not the film material. Creation of pores may also be achieved through application of electromagnetic or particulate radiation.

4. Stacked, patterned biomaterials and/or tissue engineering 3D scaffolds as obtained according to claim 3 wherein gradual provision of bioactive agents are achieved by dissolving in the films.

5. Stacked, patterned biomaterials and/or tissue engineering 3D scaffolds as claimed in claim 1 wherein applied natural and synthetic polymers are selected from the group of consisting chitosan NIPAM, PDMS, PCL, hyaluronic acid, chondroitin sulfate or blends of biodegradable and nondegradable polymers.
